# EUROPÄISCHE PATENTSCHRIFT

(11) **EP 3 576 987 B1**
(45) Veröffentlichungstag und Bekanntmachung des Hinweises auf die Patenterteilung: **17.02.2021**
(21) Anmeldenummer: 18712179.3
(22) Anmeldetag: 16.03.2018
(51) Int. Cl.: B60R 11/04

(54) **VORRICHTUNG FÜR EIN KRAFTFAHRZEUG**
DEVICE FOR A MOTOR VEHICLE
DISPOSITIF POUR UN VÉHICULE AUTOMOBILE

(30) Priorität: 20.03.2017 DE 102017105964
(43) Veröffentlichungstag der Anmeldung: 11.12.2019
(73) Patentinhaber: Witte Automotive GmbH, 42551 Velbert (DE)
(72) Erfinder: NICKEL, Andreas, 45549 Sprockhövel (DE)
(74) Vertreter: Manitz Finsterwald Patent- und Rechtsanwaltspartnerschaft mbB
(86) Internationale Anmeldenummer: PCT/EP2018/056673
(87) Internationale Veröffentlichungsnummer: WO 2018/172209

(56) Entgegenhaltungen:
- DE-A1-102010 008 214
- US-A- 4 913 458
- US-A1- 2015 258 944
- US-A1- 2016 219 204

## Beschreibung

Die vorliegende Erfindung betrifft eine Vorrichtung für ein Kraftfahrzeug mit einem Schutzelement, welches aus einer Schließstellung in eine Offenstellung verschwenkbar ist, mit einer Umgebungserfassungseinheit, welche durch eine Ausfahrbewegung in eine Aktivposition zur Bilderfassung und durch eine Einfahrbewegung in eine Ruheposition bringbar ist, in welcher die Umgebungserfassungseinheit von außen unzugänglich hinter dem in der Schließstellung befindlichen Schutzelement angeordnet ist, und mit einer an der Umgebungserfassungseinheit angreifenden Antriebseinheit zur Bewegung der Umgebungserfassungseinheit, wobei die Umgebungserfassungseinheit während ihrer Ausfahrbewegung mit dem Schutzelement in Eingriff bringbar ist, um dieses in die Offenstellung aufzudrücken.

Vorrichtungen der eingangs genannten Art, bei welchen die Umgebungserfassungseinheit erst während ihrer Ausfahrbewegung mit dem Schutzelement in Eingriff gebracht wird, um das Schutzelement in die Offenstellung aufzudrücken, sind grundsätzlich bekannt. Üblicherweise wird das Schutzelement dieser Vorrichtungen durch ein Federelement in der Schließstellung gehalten. Aufgrund mit der Zeit nachlassender Rückstellkraft des Federelements und/oder während des Fahrbetriebs auftretender Vibrationen besteht bei diesen Vorrichtungen jedoch das Problem, dass die Umgebungserfassungseinheit in ihrer Ruheposition nicht dauerhaft zuverlässig vor äußeren Einflüssen, wie beispielsweise Staub und/oder Feuchtigkeit, geschützt werden kann.

Bekannt ist auch eine Vorrichtung, bei welcher die Umgebungserfassungseinheit und das Schutzelement gelenkig miteinander verbunden sind, d.h. also dauerhaft miteinander in Eingriff stehen. Die angetriebene Umgebungserfassungseinheit drückt in diesem Fall also nicht nur das Schutzelement in die Offenstellung auf, sondern zieht das Schutzelement auch wieder in die Schließstellung zurück. Hierdurch ist zwar grundsätzlich ein besserer Schutz der Umgebungserfassungseinheit vor äußeren Einflüssen gewährleistet. Allerdings besteht bei dieser Vorrichtung das Problem, dass eine Schwenkachse der Umgebungserfassungseinheit, eine Schwenkachse des Schutzelementes und eine Gelenksachse des Verbindungsgelenks zwischen Umgebungserfassungseinheit und Schutzelement für einen störungsfreien und geräuscharmen Betrieb der Vorrichtung exakt miteinander ausgerichtet sein müssen, was aufgrund von Toleranzen in der Praxis nicht immer der Fall sein wird.

Die US 2015/0258944 A1 zeigt eine Vorrichtung zur Aufnahme einer Kamera in einem Fahrzeug, welche beispielsweise als Parkhilfe dient. In einem Gehäuse ist eine Kamera auf einem beweglichen Schlitten angebracht, der zwischen einer Ruheposition, in der die Kamera in dem Gehäuse hinter einem Schutzelement verborgen liegt, und einer Betriebsposition bewegbar ist, in der die Kamera zur Erfassung der Umgebung aus dem Gehäuse herausragt.

Der Erfindung liegt die Aufgabe zugrunde, eine Vorrichtung der eingangs genannten Art zu schaffen, welche nicht nur die Umgebungserfassungseinheit in ihrer Ruheposition dauerhaft zuverlässig vor äußeren Einflüssen schützt, sondern auch eine einwandfreie mechanische Funktion dauerhaft gewährleistet.

Die Aufgabe wird durch eine Vorrichtung mit den Merkmalen des Anspruchs 1 und insbesondere dadurch gelöst, dass die Umgebungserfassungseinheit ein Mitnahmeelement aufweist, welches während der Einfahrbewegung der Umgebungserfassungseinheit mit dem Schutzelement in Eingriff bringbar ist, um das Schutzelement in die Schließstellung zu ziehen.

Der Erfindung liegt der allgemeine Gedanke zugrunde, die Umgebungserfassungseinheit nicht dauerhaft und insbesondere nicht gelenkig mit dem Schutzelement zu verbinden, sondern die Umgebungserfassungseinheit selektiv mit dem Schutzelement in Eingriff zu bringen, nämlich zum einen um das Schutzelement aufzudrücken und zum anderen um das Schutzelement in der Schließstellung aktiv zuzuziehen. Durch den Verzicht auf eine Gelenkverbindung zwischen Umgebungserfassungseinheit und Schutzelement wird ein zusätzlicher Freiheitsgrad geschaffen, was bedeutet, dass die Vorrichtung unempfindlicher gegenüber Toleranzen ist, insbesondere in der Ausrichtung einer Schwenkachse des Schutzelementes relativ zu einer Drehachse der Umgebungserfassungseinheit. Dies gewährleistet nicht nur eine dauerhaft zuverlässige mechanische Funktion der Vorrichtung, sondern minimiert auch die Geräuschentwicklung während des Betriebs der Vorrichtung, insbesondere während der Aus- und Einfahrbewegung der Umgebungserfassungsein heit.

Die Umgebungserfassungseinheit kann beispielsweise eine Kamera, eine LiDAR-, LaDAR- oder Radareinrichtung oder einen sonstigen optischen Sensor umfassen, welcher dazu geeignet ist, die Fahrzeugumgebung zu erfassen. Des Weiteren ist es vorstellbar, dass die Umgebungserfassungseinheit hinter dem Emblem eines Fahrzeugherstellers angeordnet ist. Dabei kann das Schutzelement grundsätzlich durch das Emblem selbst gebildet sein. Bevorzugt ist das Schutzelement jedoch in Form eines separaten Kameradeckels ausgebildet, welcher zwischen dem Emblem und der Umgebungserfassungseinheit angeordnet ist.

Vorteilhafte Ausbildungen der Erfindung sind den Unteransprüchen, der Beschreibung und der Zeichnung zu entnehmen.

Gemäß einer Ausführungsform gelangt das Mitnahmeelement bei Annäherung der Umgebungserfassungseinheit an die Ruheposition mit dem Schutzelement in Eingriff. Mit anderen Worten geraten das Mitnahmeelement und das Schutzelement erst kurz vor Erreichen der Ruheposition in Eingriff, nämlich ausschließlich um das Schutzelement endgültig in die Schließposition zu ziehen, während das Mitnahmeelement und das Schutzelement während des überwiegenden Teils der Einfahrbewegung der Umgebungserfassungseinheit außer Eingriff stehen.

Gemäß einer besonders einfachen baulichen Ausführungsform umfasst das Mitnahmeelement wenigstens eine Rippe, die an einer Seitenfläche der Umgebungserfassungseinheit ausgebildet ist. Für eine ausgeglichene Kräfteverteilung umfasst das Mitnahmeelement bevorzugt zwei Rippen, die an gegenüberliegenden Seitenflächen der Umgebungserfassungseinheit ausgebildet sind. Dabei kann die oder jede Seitenfläche der Umgebungserfassungseinheit im Wesentlichen rechtwinklig zu dem Schutzelement orientiert sein.

Gemäß einer weiteren Ausführungsform ist das Schutzelement mit einem Fangzapfen für die oder jede Rippe versehen, welcher bei Annäherung der Umgebungserfassungseinheit an die Ruheposition von der zugeordneten Rippe hintergriffen wird.

Die Umgebungserfassungseinheit kann einen Vorsprung aufweisen, welcher an einer dem Schutzelement zugewandten Seite der Umgebungserfassungseinheit ausgebildet ist und sich während der Ausfahrbewegung der Umgebungserfassungseinheit an einer der Umgebungserfassungseinheit zugewandten Seite des Schutzelements abstützt. Umgekehrt ist es aber ebenso möglich, einen entsprechenden Vorsprung an einer der Umgebungserfassungseinheit zugewandten Oberfläche des Schutzelementes vorzusehen, welcher während der Ausfahrbewegung der Umgebungserfassungseinheit mit dieser in Eingriff gerät.

Die der Umgebungserfassungseinheit zugewandte Seite des Schutzelements kann profiliert sein und insbesondere eine Erhebung aufweisen, auf welche ein Vorsprung der Umgebungserfassungseinheit während der Ausfahrbewegung der Umgebungserfassungseinheit aufläuft. Die Erhebung trägt zu einer Vergrößerung des Öffnungswinkels des aufgeschwenkten Schutzelements bei und somit letztlich zu einem größeren Blickwinkel der Umgebungserfassungseinheit.

Gemäß einer weiteren Ausführungsform ist die Umgebungserfassungseinheit um eine erste und eine zweite Drehachse drehbar gelagert. Hierdurch lassen sich Kamerabewegungen darstellen, welche über eine einfache Rotation hinausgehen und eine kompaktere Bauform der Vorrichtung insgesamt ermöglichen.

Dabei kann die erste Drehachse in einer, insbesondere gekrümmten, Kulisse verschiebbar geführt sein und/oder die zweite Drehachse an einem Schwenkarm angeordnet sein, welcher seinerseits um eine dritte Drehachse verschwenkbar ist.

Gemäß einer weiteren Ausführungsform umfasst die Antriebseinheit eine mit der Umgebungserfassungseinheit, insbesondere gelenkig, verbundene gekrümmte Zahnstange. Die Krümmung der Zahnstange, welche beispielsweise durch einen Antriebsmotor, insbesondere einen Elektromotor, angetrieben werden kann, trägt zu einer kompakteren Bauform der Vorrichtung insgesamt bei.

Ein besonders guter Schutz der in Ruheposition befindlichen Umgebungserfassungseinheit vor äußeren Einflüssen wird erreicht, wenn das Schutzelement durch die in Ruheposition befindliche Umgebungserfassungseinheit gegen ein Dichtungselement gezogen wird, welches im Bereich einer durch das Schutzelement zu verschließenden Gehäuseöffnung angeordnet ist. Vorteilhafterweise umgibt das Dichtungselement die Gehäuseöffnung zumindest annähernd vollständig.

Nachfolgend wird die Erfindung rein beispielhaft anhand einer möglichen Ausführungsform unter Bezugnahme auf die beigefügte Zeichnung beschrieben.

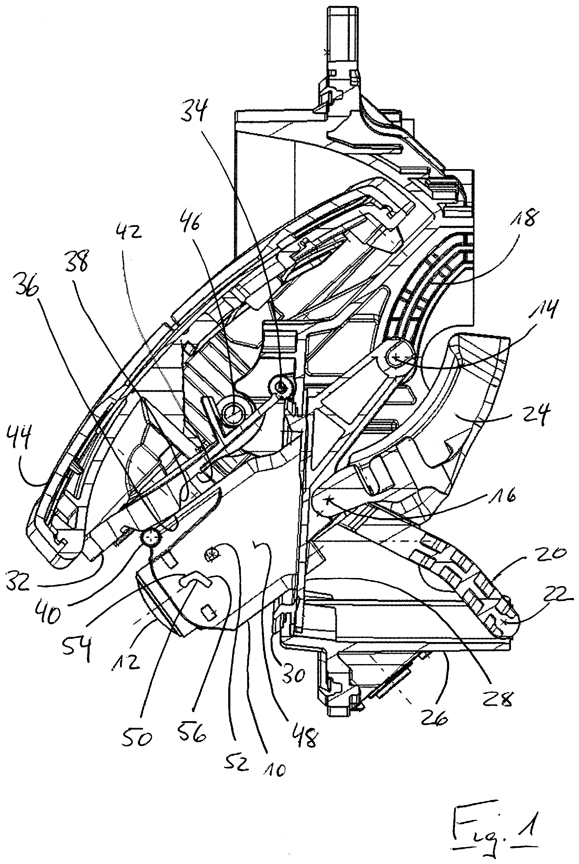

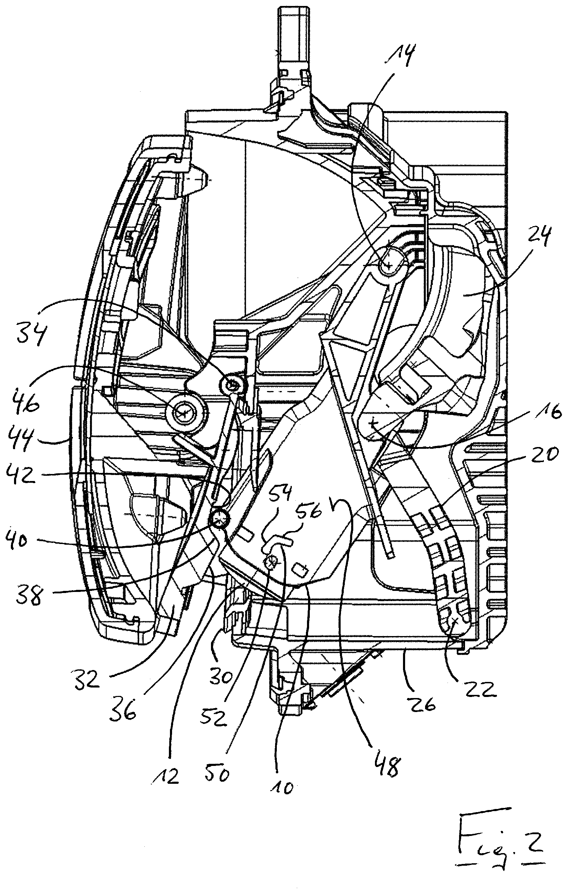

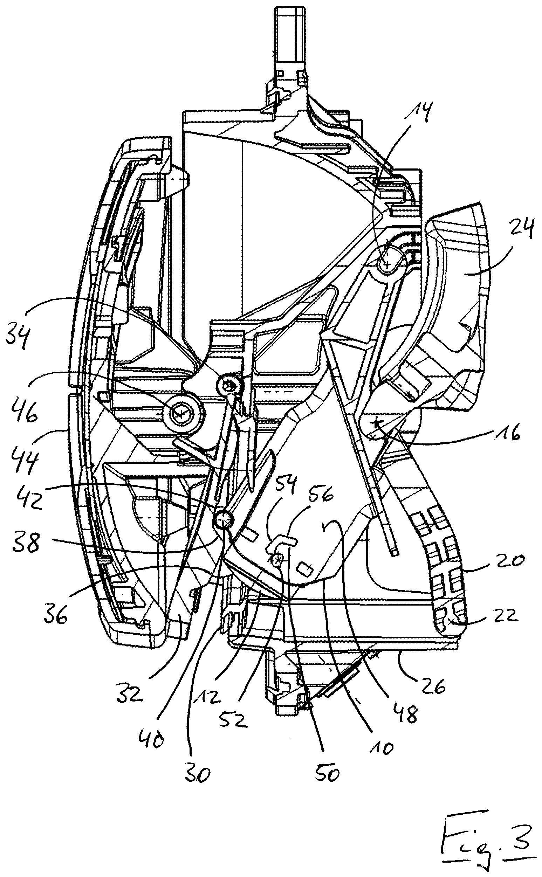

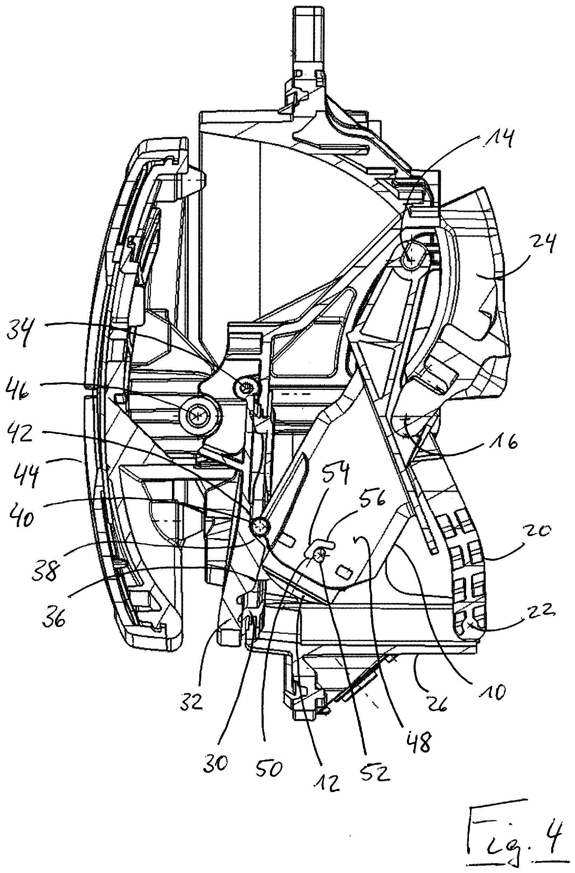

- Fig. 1 bis 4: zeigen teilweise Schnittansichten einer erfindungsgemäßen Vorrichtung während verschiedener Stadien der Einfahrbewegung einer Umgebungserfassungseinheit, ausgehend von einer Aktivposition zur Bilderfassung (Fig. 1) bis zu einer Ruheposition (Fig. 4).

Die in den Figuren dargestellte Vorrichtung weist eine Umgebungserfassungseinheit 10 auf, welche im vorliegenden Ausführungsbeispiel eine Rückfahrkamera 12 für ein Kraftfahrzeug umfasst.

Die Umgebungserfassungseinheit 10 ist um eine erste Drehachse 14 und eine dazu beabstandete zweite Drehachse 16 drehbar gelagert. Dabei ist die erste Drehachse 14 entlang einer gekrümmten Kulisse 18 verschiebbar geführt, während die zweite Drehachse 16 an einem ersten Ende eines Schwenkarms 20 angeordnet ist, dessen zweites Ende um eine dritte Drehachse 22 drehbar gelagert ist.

Die Umgebungserfassungseinheit 10 ist durch eine Ausfahrbewegung in eine Aktivposition zur Bilderfassung (Fig. 1) und durch eine Einfahrbewegung in eine Ruheposition (Fig. 4) bringbar. Die Aus- und Einfahrbewegungen der Umgebungserfassungseinheit 10 werden durch eine Antriebseinheit bewirkt, welche eine Zahnstange 24 umfasst, die mit der Umgebungserfassungseinheit 10 gelenkig verbunden ist. Im vorliegenden Ausführungsbeispiel greift die Zahnstange 24 derart im Bereich des ersten Endes des Schwenkarms 20 an der Umgebungserfassungseinheit 10 an, dass die zweite Drehachse 16 und die Gelenkachse der Zahnstange 24 zusammenfallen. Aufgrund der zweiachsigen Lagerung der Umgebungserfassungseinheit 10 und der gekrümmten Form der Zahnstange 24 vollführt die Umgebungserfassungseinheit 10 während der Aus- und Einfahrbewegungen eine Kombination aus Rotation und Translation.

In Ruheposition ist die Umgebungserfassungseinheit 10 in einem Gehäuse 26 untergebracht, welches eine Gehäusewand 28 aufweist, die eine Gehäuseöffnung begrenzt, durch welche die Umgebungserfassungseinheit 10 aus ihrer Ruheposition in ihre Aktivposition ausfahren bzw. aus ihrer Aktivposition in ihre Ruheposition einfahren kann. Die Gehäusewand 28 trägt ein Dichtungselement 30, welches die Gehäuseöffnung zumindest annähernd vollständig umgibt.

In den Figuren oberhalb der Gehäuseöffnung ist ein Kameradeckel 32 an dem Gehäuse 26 angebracht, welcher um eine vierte Drehachse 34 gelagert ist und zwischen einer in Fig. 1 gezeigten Offenstellung und einer in Fig. 4 gezeigten Schließstellung verschwenkt werden kann, wobei der Kameradeckel 32 in seiner Schließstellung die Gehäuseöffnung verschließt, um die in Ruheposition befindliche Umgebungserfassungseinheit 10 vor äußeren Einflüssen zu schützen. Der Kameradeckel 32 bildet mit anderen Worten also ein Schutzelement.

Eine der Umgebungserfassungseinheit 10 zugewandte Seite des Kameradeckels 32 ist profiliert ausgebildet und weist insbesondere eine Erhebung 36 mit wenigstens einer schräg abfallenden Flanke 38 auf.

Die Umgebungserfassungseinheit 10 ist an einer dem Kameradeckel 32 zugewandten Seite mit einem Vorsprung 40 versehen, welcher im vorliegenden Ausführungsbeispiel in Form eines in die Umgebungserfassungseinheit 10 eingelassenen Bolzens ausgebildet ist. Der Vorsprung 40 stützt sich während der Ein- und Ausfahrbewegungen der Umgebungserfassungseinheit 10 an dem Kameradeckel 32 ab und bewegt sich beim Ausfahren der Umgebungserfassungseinheit 10 aus einem abgeflachten Bereich 42 des Kameradeckels 32 die schräge Flanke 38 hinauf auf die Erhebung 36 bzw. von der Erhebung 36 über die schräge Flanke 38 wieder zurück in den abgeflachten Bereich 42, wenn die Umgebungserfassungseinheit 10 wieder einfährt. Befindet sich die Umgebungserfassungseinheit 10 in ihrer Ruheposition, so kann der Vorsprung 40 mit dem Kameradeckel 32 in Kontakt stehen, dies ist aber nicht zwingend erforderlich.

Auf einer der Umgebungserfassungseinheit 10 abgewandten Seite des Kameradeckels 32 ist ein Emblem 44 um eine fünfte Drehachse 46 verdrehbar an dem Gehäuse 26 gelagert. Im vorliegenden Ausführungsbeispiel ist das Emblem 44 in Form einer Handhabe ausgebildet, beispielsweise zur Öffnung des Schlosses eines Kofferraumdeckels. Zu diesem Zweck ist das Emblem 44 unabhängig von dem Kameradeckel 32 bewegbar, das heißt das Emblem 44 kann um die fünfte Drehachse 46 verdreht werden, ohne dass der Kameradeckel 32 seine Schließstellung verlässt. Die Verdrehung des Emblems 44 aus der in Fig. 4 gezeigten Ruhestellung in die in Fig. 1 gezeigte Betätigungsstellung erfolgt dabei entgegen der Rückstellkraft eines in den Figuren nicht dargestellten Federelements, welches mit dem Emblem 44 zusammenwirkt, zum Beispiel einer Schenkelfeder.

Die vierte Drehachse 34 und die fünfte Drehachse 46 sind derart relativ zueinander angeordnet, dass der Kameradeckel 32 in seiner Schließstellung von dem Emblem 44 beabstandet ist und erst bei seiner Verschwenkung aus der Schließstellung (Fig. 4) in die Offenstellung (Fig. 1) mit dem Emblem 44 in Eingriff gerät und dieses aus der Ruhestellung in die Betätigungsstellung mit verdreht.

Während ihrer Ausfahrbewegung drückt die Umgebungserfassungseinheit 10 mittels des Vorsprungs 40 den Kameradeckel 32 in die Offenstellung auf. Dabei gerät der Kameradeckel 32 ab einem vorbestimmten Öffnungswinkel mit dem Emblem 44 in Eingriff, so dass die weitere Verschwenkung des Kameradeckels 32 in die Offenstellung gleichzeitig eine Verdrehung des Emblems 44 bewirkt und somit entgegen der Rückstellkraft des mit dem Emblem 44 zusammenwirkenden Federelements erfolgt. Umgekehrt sorgt das Federelement dafür, dass sich das Emblem 44 beim Einfahren der Umgebungserfassungseinheit 10 wieder zurück in seine Ruhestellung bewegt und dabei auch den Kameradeckel 32 zurückdrückt.

Unter anderem für einen besseren Schutz der in Ruheposition befindlichen Umgebungserfassungseinheit 10 vor äußeren Einflüssen und zur Vermeidung einer unerwünschten Geräuschentwicklung wird der Kameradeckel 32 in seiner von dem Emblem 44 gelösten Schließstellung durch die Umgebungserfassungseinheit 10 gegen das Dichtungselement 30 angezogen. Hierzu ist die Umgebungserfassungseinheit 10 an gegenüberliegenden und zu dem Kameradeckel 32 im Wesentlichen rechtwinklig orientierten Seitenflächen 48 jeweils mit einem Mitnahmeelement in Form einer abgewinkelten Rippe 50 versehen, welche so angeordnet ist, dass sie jeweils mit einem an dem Kameradeckel 32 ausgebildeten Fangzapfen 52 in Eingriff gelangt, wenn der Kameradeckel 32 und das Emblem 44 gegen Ende der Einfahrbewegung der Umgebungserfassungseinheit 10 außer Eingriff geraten und sich die Umgebungserfassungseinheit 10 ihrer Ruheposition und der Kameradeckel 32 seiner Schließstellung annähern, ohne länger durch das auf das Emblem 44 wirkende Federelement beaufschlagt zu sein.

Konkret weist jede Rippe 50 einen sich zumindest annähernd in Richtung der optischen Achse der Kamera erstreckenden ersten Schenkel 54 und einen sich quer zur optischen Achse erstreckenden zweiten Schenkel 56 auf. Da der erste Schenkel 54 gleichzeitig quer zur Rotationskomponente der Einfahrbewegung der Umgebungserfassungseinheit 10 orientiert ist, kann er den zugeordneten Fangzapfen 52 ab einem vorbestimmten Einfahrwinkel der Umgebungserfassungseinheit 10 hintergreifen, beispielsweise wenn die Umgebungserfassungseinheit 10 zu mehr als 90 % in das Gehäuse 26 eingefahren ist, so dass die Umgebungserfassungseinheit 10 während der Endphase ihrer Einfahrbewegung, beispielsweise während etwa der letzten 10 %, den Kameradeckel 32 aktiv in Richtung der Gehäusewand 28 und somit gegen das Dichtungselement 30 zieht.

Umgekehrt üben die Rippen 50 während der Ausfahrbewegung der Umgebungserfassungseinheit 10 keine Kraft auf die Fangzapfen 52 aus. Vielmehr lösen sich die Rippen 50 von den Fangzapfen 52, sobald der Kameradeckel 32 mit dem Emblem 44 in Eingriff gerät und entgegen der Rückstellkraft des Federelements bewegt wird.

### Bezugszeichenliste

- 10: Umgebungserfassungseinheit
- 12: Rückfahrkamera
- 14: erste Drehachse
- 16: zweite Drehachse
- 18: Kulisse
- 20: Schwenkarm
- 22: dritte Drehachse
- 24: Zahnstange
- 26: Gehäuse
- 28: Gehäusewand
- 30: Dichtungselement
- 32: Kameradeckel
- 34: vierte Drehachse
- 36: Erhebung
- 38: schräge Flanke
- 40: Vorsprung
- 42: abgeflachter Bereich
- 44: Emblem
- 46: fünfte Drehachse
- 48: Seitenfläche
- 50: Rippe
- 52: Fangzapfen
- 54: erster Schenkel
- 56: zweiter Schenkel

## Patentansprüche

1. Vorrichtung für ein Kraftfahrzeug mit einem Schutzelement (32), welches aus einer Schließstellung in eine Offenstellung verschwenkbar ist, mit einer Umgebungserfassungseinheit (10), welche durch eine Ausfahrbewegung in eine Aktivposition zur Bilderfassung und durch eine Einfahrbewegung in eine Ruheposition bringbar ist, in welcher die Umgebungserfassungseinheit (10) von außen unzugänglich hinter dem in der Schließstellung befindlichen Schutzelement (32) angeordnet ist, und mit einer an der Umgebungserfassungseinheit (10) angreifenden Antriebseinheit zur Bewegung der Umgebungserfassungseinheit (10), wobei die Umgebungserfassungseinheit (10) während ihrer Ausfahrbewegung mit dem Schutzelement (32) in Eingriff bringbar ist, um dieses in die Offenstellung aufzudrücken,
**dadurch gekennzeichnet, dass** die Umgebungserfassungseinheit (10) ein Mitnahmeelement (50) aufweist, welches während der Einfahrbewegung der Umgebungserfassungseinheit (10) mit dem Schutzelement (32) in Eingriff bringbar ist, um das Schutzelement (32) in die Schließstellung zu ziehen.

2. Vorrichtung nach Anspruch 1,
**dadurch gekennzeichnet, dass** das Mitnahmeelement (50) bei Annäherung der Umgebungserfassungseinheit (10) an die Ruheposition mit dem Schutzelement (32) in Eingriff gelangt.

3. Vorrichtung nach Anspruch 1 oder 2,
**dadurch gekennzeichnet, dass** das Mitnahmeelement wenigstens eine Rippe (50) umfasst, die an einer Seitenfläche (48) der Umgebungserfassungseinheit (10) ausgebildet ist.

4. Vorrichtung nach Anspruch 3,
**dadurch gekennzeichnet, dass** das Mitnahmeelement zwei Rippen (50) umfasst, die an gegenüberliegenden Seitenflächen (48) der Umgebungserfassungseinheit (10) ausgebildet ist.

5. Vorrichtung nach Anspruch 4,
**dadurch gekennzeichnet, dass** die oder jede Seitenfläche (48) der Umgebungserfassungseinheit (10) im Wesentlichen rechtwinklig zum Schutzelement (32) orientiert ist.

6. Vorrichtung nach zumindest einem der Ansprüche 3 bis 5,
**dadurch gekennzeichnet , dass** das Schutzelement (32) mit einem Fangzapfen (52) für die oder jede Rippe (50) versehen ist, welcher bei Annäherung der Umgebungserfassungseinheit (10) an die Ruheposition von der zugeordneten Rippe (50) hintergriffen wird.

7. Vorrichtung nach zumindest einem der vorstehenden Ansprüche,
**dadurch gekennzeichnet, dass** die Umgebungserfassungseinheit (10) einen Vorsprung (40) aufweist, welcher an einer dem Schutzelement (32) zugewandten Seite der Umgebungserfassungseinheit (10) ausgebildet ist und sich während der Ausfahrbewegung der Umgebungserfassungseinheit (10) an einer der Umgebungserfassungseinheit (10) zugewandten Seite des Schutzelements (32) abstützt.

8. Vorrichtung nach Anspruch 7,
**dadurch gekennzeichnet, dass** dass die der Umgebungserfassungseinheit (10) zugewandte Seite des Schutzelements (32) profiliert ist und insbesondere eine Erhebung (36) aufweist, auf welche der Vorsprung (40) der Umgebungserfassungseinheit (10) während der Ausfahrbewegung der Umgebungserfassungseinheit (10) aufläuft.

9. Vorrichtung nach zumindest einem der vorstehenden Ansprüche,
**dadurch gekennzeichnet, dass** die Umgebungserfassungseinheit (10) um eine erste und eine zweite Drehachse (14, 16) drehbar gelagert ist.

10. Vorrichtung nach Anspruch 9,
**dadurch gekennzeichnet , dass** die erste Drehachse (14) in einer, insbesondere gekrümmten, Kulisse (18) verschiebbar geführt ist.

11. Vorrichtung nach Anspruch 9 oder 10,
**dadurch gekennzeichnet, dass** die zweite Drehachse (16) an einem Schwenkarm (20) angeordnet ist, welcher seinerseits um eine dritte Drehachse (22) verschwenkbar ist.

12. Vorrichtung nach zumindest einem der vorstehenden Ansprüche,
**dadurch gekennzeichnet, dass** die Antriebseinheit eine mit der Umgebungserfassungseinheit (10), insbesondere gelenkig verbundene, gekrümmte Zahnstange (24) umfasst.

13. Vorrichtung nach zumindest einem der vorstehenden Ansprüche,
**dadurch gekennzeichnet, dass** das Schutzelement (32) durch die in Ruheposition befindliche Umgebungserfassungseinheit (10) gegen ein Dichtungselement (30) gezogen wird, welches im Bereich einer durch das Schutzelement (32) zu verschließen Gehäuseöffnung angeordnet ist, insbesondere welches die Gehäuseöffnung zumindest annähernd vollständig umgibt.

14. Vorrichtung nach zumindest einem der vorstehenden Ansprüche,
**dadurch gekennzeichnet, dass** das Schutzelement (32) entgegen der Rückstellkraft eines Federelements aus der Schließstellung in die Offenstellung verschwenkbar ist.

## Claims

1. An apparatus for a motor vehicle having a protective element (32) which is pivotable from a closed position into an open position; having an environment detection unit (10) which can be brought into an active position for image detection by an extension movement and into a position of rest by a retraction movement, in which position of rest the environment detection unit (10) is arranged in a manner inaccessible from the outside behind the protective element (32) located in the closed position; and having a drive unit engaging at the environment detection unit (10) for moving the environment detection unit (10), wherein the environment detection unit (10) can be brought into engagement with the protective element (32) during its extension movement in order to press said protective element (32) open into the open position,
**characterized in that**
the environment detection unit (10) has an entrainment element (50) which can be brought into engagement with the protective element (32) during the retraction movement of the environment detection unit (10) in order to pull the protective element (32) into the closed position.

2. An apparatus in accordance with claim 1,
**characterized in that**
the entrainment element (50) comes into engagement with the protective element (32) when the environment detection unit (10) approaches the position of rest.

3. An apparatus in accordance with claim 1 or claim 2,
**characterized in that**
the entrainment element comprises at least one rib (50) which is formed at a side surface (48) of the environment detection unit (10).

4. An apparatus in accordance with claim 3,
**characterized in that**
the entrainment element comprises two ribs (50) which are formed at oppositely disposed side surfaces (48) of the environment detection unit (10).

5. An apparatus in accordance with claim 4,
**characterized in that**
the or each side surface (48) of the environment detection unit (10) is oriented substantially at a right angle to the protective element (32).

6. An apparatus in accordance with at least one of the claims 3 to 5,
**characterized in that**
the protective element (32) is provided with a catching pin (52) for the or each rib (50) which is engaged behind by the associated rib (50) when the environment detection unit (10) approaches the position of rest.

7. An apparatus in accordance with at least one of the preceding claims,
**characterized in that**
the environment detection unit (10) has a projection (40) which is formed at a side of the environment detection unit (10) facing the protective element (32) and which is supported at a side of the protective element (32) facing the environment detection unit (10) during the extension movement of the environment detection unit (10).

8. An apparatus in accordance with claim 7,
**characterized in that**
the side of the protective element (32) facing the environment detection unit (10) is profiled and in particular has an elevated portion (36) onto which the projection (40) of the environment detection unit (10) runs during the extension movement of the environment detection unit (10).

9. An apparatus in accordance with at least one of the preceding claims,
**characterized in that**
the environment detection unit (10) is rotatably supported about a first and a second axis of rotation (14, 16).

10. An apparatus in accordance with claim 9,
**characterized in that**
the first axis of rotation (14) is displaceably guided in a slotted part (18) which is in particular curved.

11. An apparatus in accordance with claim 9 or claim 10,
**characterized in that**
the second axis of rotation (16) is arranged at a pivot arm (20) which is in turn pivotable about a third axis of rotation (22).

12. An apparatus in accordance with at least one of the preceding claims,
**characterized in that**
the drive unit comprises a curved toothed rack (24) which is connected, in particular connected in an articulated manner, to the environment detection unit (10).

13. An apparatus in accordance with at least one of the preceding claims,
**characterized in that**
the protective element (32) is pulled by the environment detection unit (10), which is in the position of rest, against a sealing element (30) which is arranged in the region of a housing opening to be closed by the protective element (32) and which in particular at least approximately completely surrounds the housing opening.

14. An apparatus in accordance with at least one of the preceding claims,
**characterized in that**
the protective element (32) can be pivoted against the return force of a spring element from the closed position into the open position.

## Revendications

1. Dispositif pour un véhicule automobile, comportant un élément de protection (32) qui peut être pivoté d'une position fermée jusque dans une position ouverte, comportant une unité de détection d'environnement (10) qui peut être amenée par un mouvement de déploiement jusque dans une position active pour l'acquisition d'images et par un mouvement de rétraction jusque dans une position de repos dans laquelle l'unité de détection d'environnement (10) est disposée derrière l'élément de protection (32) en position fermée de manière à être inaccessible de l'extérieur, et comportant une unité d'entraînement s'engageant sur l'unité de détection d'environnement (10) pour déplacer l'unité de détection d'environnement (10), l'unité de détection d'environnement (10) pouvant être amenée, lors de son mouvement de déploiement, en engagement avec l'élément de protection (32) pour pousser ce dernier jusque dans la position ouverte,
**caractérisé en ce que**
l'unité de détection d'environnement (10) comprend un élément entraîneur (50) qui peut être amené en engagement avec l'élément de protection (32) pendant le mouvement de rétraction de l'unité de détection d'environnement (10), afin de tirer l'élément de protection (32) jusque dans la position fermée.

2. Dispositif selon la revendication 1,
**caractérisé en ce que**
l'élément entraîneur (50) vient en engagement avec l'élément de protection (32) lorsque l'unité de détection d'environnement (10) s'approche de la position de repos.

3. Dispositif selon la revendication 1 ou 2,
**caractérisé en ce que**
l'élément entraîneur comprend au moins une nervure (50) qui est réalisée sur une surface latérale (48) de l'unité de détection d'environnement (10).

4. Dispositif selon la revendication 3,
**caractérisé en ce que**
l'élément entraîneur comprend deux nervures (50) qui sont réalisées sur des surfaces latérales opposées (48) de l'unité de détection d'environnement (10).

5. Dispositif selon la revendication 4,
**caractérisé en ce que**
la ou chaque surface latérale (48) de l'unité de détection d'environnement (10) est orientée sensiblement perpendiculairement à l'élément de protection (32).

6. Dispositif selon l'une au moins des revendications 3 à 5,
**caractérisé en ce que**
l'élément de protection (32) est muni d'une goupille d'arrêt (52) pour la ou chaque nervure (50), goupille d'arrêt qui est engagée par l'arrière par la nervure associée (50) lorsque l'unité de détection d'environnement (10) s'approche de la position de repos.

7. Dispositif selon l'une au moins des revendications précédentes,
**caractérisé en ce que**
l'unité de détection d'environnement (10) comporte une saillie (40) qui est réalisée sur un côté de l'unité de détection d'environnement (10) tourné vers l'élément de protection (32) et qui s'appuie sur un côté de l'élément de protection (32) tourné vers l'unité de détection d'environnement (10) pendant le mouvement de déploiement de l'unité de détection d'environnement (10).

8. Dispositif selon la revendication 7,
**caractérisé en ce que**
le côté de l'élément de protection (32) tourné vers l'unité de détection d'environnement (10) est profilé et comprend en particulier un bossage (36) sur lequel la saillie (40) de l'unité de détection d'environnement (10) vient buter pendant le mouvement de déploiement de l'unité de détection d'environnement (10).

9. Dispositif selon l'une au moins des revendications précédentes,
**caractérisé en ce que**
l'unité de détection d'environnement (10) est montée de façon mobile en rotation autour d'un premier et d'un second axe de rotation (14, 16).

10. Dispositif selon la revendication 9,
**caractérisé en ce que**
le premier axe de rotation (14) est guidé de façon mobile en translation dans une glissière (18) en particulier incurvée.

11. Dispositif selon la revendication 9 ou 10,
**caractérisé en ce que**
le second axe de rotation (16) est disposé sur un bras pivotant (20) qui peut pivoter à son tour autour d'un troisième axe de rotation (22).

12. Dispositif selon l'une au moins des revendications précédentes,
**caractérisé en ce que**
l'unité d'entraînement comprend une crémaillère incurvée (24) reliée, en particulier de manière articulée, à l'unité de détection d'environnement (10).

13. Dispositif selon l'une au moins des revendications précédentes,
**caractérisé en ce que**
l'élément de protection (32) est tiré contre un élément d'étanchéité (30) par l'unité de détection d'environnement (10) située en position de repos, élément d'étanchéité qui est disposé dans la zone d'une ouverture de boîtier à refermer par l'élément de protection (32), en particulier qui entoure au moins approximativement complètement l'ouverture de boîtier.

14. Dispositif selon l'une au moins des revendications précédentes,
**caractérisé en ce que**
l'élément de protection (32) peut pivoter de la position fermée jusque dans la position ouverte à l'encontre de la force de rappel d'un élément formant ressort.
